# EUROPEAN PATENT SPECIFICATION

(11) **EP 4 592 072 B1**
(45) Date of publication and mention of the grant of the patent: **15.04.2026**
(21) Application number: 24153718.2
(22) Date of filing: 24.01.2024
(51) Int. Cl.: B32B 5/02, B32B 5/06, B32B 5/26

(54) **NONWOVEN COMPOSITE FABRIC**
VERBUNDVLIESSTOFF
TISSU COMPOSITE NON TISSÉ

(43) Date of publication of application: 30.07.2025
(73) Proprietor: Carl Freudenberg KG, 69469 Weinheim (DE)
(72) Inventor: Abdelwahed, Boutheina, Raleigh 27603 North Carolina (US); Beck, Bénédicte, 68040 Ingersheim (FR)

(56) References cited:
- EP-B1- 3 108 052
- WO-A1-2015/124334
- US-A1- 2017 050 220

## Description

The present invention relates to a nonwoven composite fabric having excellent water uptake and distribution properties combined with good cleaning performance and low adherence to the surface to be cleaned. The present invention also relates to a method for manufacturing the nonwoven composite fabric, its use and a method of cleaning, specifically of cleaning a flat surface, in particular a floor. In addition, the present invention relates to a cleaning device, in particular a flat wiper comprising the nonwoven composite fabric.

It is known that textile fabrics, such as nonwoven fabrics are well suited for cleaning purposes. Nonwoven fabrics are materials made from fibers such as staple fibers (with a defined length) and/or filaments (theoretically continuous), bonded together by chemical, mechanical, heat and/or solvent treatment. The term "nonwoven fabric" is used in the textile manufacturing industry to denote textile fabrics, which are neither woven nor knitted. Nonwoven fabrics are described in ISO 9092:2019. Nonwoven composite fabrics are nonwoven fabrics that are combined with other materials such as further plies.

US 2017/0050220 A1 (A1) describes a cleaning cloth, comprising:
a microfiber composite nonwoven comprising a first fibrous component and a second fibrous component, arranged as alternating plies, wherein at least one first ply A comprises the first fibrous component as melt-spun composite filaments laid down to form a web, at least some of which have been split into elemental filaments having an average linear density of less than 0.1 dtex, and consolidated, wherein at least one ply B is arranged on the first ply A, wherein the ply B comprises the second fibrous component as fibers having an average linear density of 0.1 to 3 dtex which have been laid down to form a web and consolidated, and wherein at least one second ply A is arranged on the ply B. The composite nonwoven may also contain further plies.

The further plies can be configured as reinforcing plies, for example in the form of a scrim, and/or that comprise non-crimp fabrics, knitted fabrics other than those produced by weft knitting with independently-movable needles, woven fabrics, nonwoven fabrics and/or reinforcing filaments.

There is a constant need for improved nonwoven fabrics which can be used for cleaning purposes. Specifically, there is a need for cleaning clothes with low adherence to the surface to be cleaned because this makes cleaning easier and quicker. Low adherence to the surface is particularly advantageous if flat surfaces are cleaned because it allows the cleaning cloth, for example when used as part of a cleaning device, such as a flat wiper, to glid more easily making it efficient in picking up dirt and debris. This reduces the effort required to push the cleaning device, making the cleaning process smoother and more effective.

WO 2015 124 334 A1 discloses a microfiber composite nonwoven comprising a first and a second fibrous component arranged in the form of alternating plies, wherein: at least one first ply A comprises the first fibrous component in the form of melt-spun composite filaments laid down to form a web, some or all of which have been split into elemental filaments having an average linear density of less than 0.1 dtex, preferably between 0.03 dtex and 0.06 dtex, and consolidated; at least one ply B is arranged on the first ply A, wherein the ply B comprises the second fibrous component in the form of fibers having an average linear density of 0.1 to 3 dtex which have been laid down to form a web and consolidated; and at least one second ply A is arranged on the ply B, characterized in that the microfiber composite nonwoven has a layered construction A(BA)n BA where n = 1 to 20.

The object underlying the present invention is to provide a nonwoven composite fabric that can be used as cleaning cloth and that combines good cleaning performance, in particular high capillarity, rapid water uptake and distribution capacity with low adherence to the surface to be cleaned.

This object is achieved by a nonwoven composite fabric comprising layer A, layer B and layer C, wherein
a) layer A is a first nonwoven fabric and comprises first fibers, preferably first filaments, being first melt-spun composite fibers, preferably first melt-spun composite filaments, which are splitted to at least some extent to produce first elementary fibers, preferably first elementary filaments, having an average titer of at most 0.2 dtex;
b) layer B is a grid comprising yarns having an average titer from 400 dtex to 2200 dtex, preferably from 600 dtex to 2200 dtex, more preferably from 800 dtex to 2200 dtex, in particular from 1100 dtex to 2200 dtex;
c) layer C is a textile fabric that comprises second fibers, preferably second filaments with an average titer from 0.25 to 10 dtex, preferably 0.25 to 5 dtex, in particular 2 to 5 dtex;
wherein layers A and B are adjacent to each other, and wherein at least one surface layer of the nonwoven composite fabric is formed by layer A or layer B.

In practical experiments it was found that the nonwoven composite fabric according to the invention has an excellent cleaning performance due to the combination of microfiber layer A having high capillarity, rapid water uptake and distribution capacity, and layer C having high absorption capacity due to the coarser second fibers. When using the nonwoven composite fabric, it is advantageous to use layer A as side facing the surface to be cleaned because the microfibers have the above mentioned advantageous cleaning properties. In doing so it was surprisingly found that friction to the surface to be cleaned is low. This was unexpected because usually microfibers have a high adherence to the floor which hinders the cleaning flow. Accordingly, in a preferred embodiment the nonwoven composite fabric is designed in such a way that upon use layer A or B, preferably layer A, is the side facing the surface to be cleaned.

As a result of its low friction the inventive nonwoven composite fabric allows an efficient, stagnationless cleaning, in particular of flat surfaces. It is believed that the low friction is made possible by the grid layer B comprising thick yarns. These yarns surprisingly modify the surface properties of the nonwoven composite fabric in a way that adherence to the cleaning surface is reduced. Without being tied to a mechanism it is believed that the reduction of adherence is enabled by a 3-D like structure which the grid has due to the presence of the thick yarns being arranged in a grid pattern structure. This 3-D like structure allows to reduce contact points between the nonwoven composite fabric and the surface to be cleaned. The reduced friction in turn allows faster and more efficient cleaning of a defined surface.

Furthermore, it was surprisingly found that the 3-D like structure of the grid can modify the surface of the nonwoven composite fabric not only if layer B forms a surface layer of the nonwoven composite fabric but also if a surface layer is formed by layer A - provided layer B is adjacent to layer A.

In addition, it was found that because layer A and B are adjacent to each other the grid can work synergistically with layer A in that parts of the thin elementary fibers of layer A can enter the open pores of the grid layer B and thereby improve stability of the composite. Adjacent to each other means that there are no intermediate layers between the respective layers. Accordingly, since layers A and B are adjacent to each other there is no intermediate layer between layers A and B. Preferably, also layers B and C or layers A and C are adjacent to each other. In a preferred embodiment a) in case the nonwoven composite fabric has the layer sequence ABC there are no intermediate layers between layers A and B and there are no intermediate layers between layers B and C and b) in case the nonwoven composite fabric has the layer sequence CAB there are no intermediate layers between layers A and B and there are no intermediate layers between layers A and C.

In a preferred embodiment the thickness of layer A measured according to DIN EN ISO 9073-2:1997-02 is below 1 mm, such as from 0.1 to 0.9 mm, preferably from 0.1 mm to 0.8 mm, in particular from 0,2 mm to 0,5 mm.

This is advantageous because such a thin layer A allows to use a relatively thick layer C without having a too thick product as a whole.

In a further preferred embodiment the nonwoven composite fabric is produced on the basis of a starting layer A having a thickness measured according to DIN EN ISO 9073-2:1997-02 below 1 mm, such as from 0.1 to 0.9 mm, preferably from 0.1 mm to 0.8 mm, in particular from 0,2 mm to 0,5 mm.

For the same reason it is advantageous if the weight per unit area of layer A measured according to ISO 9073-1:1989-07 is at most 100 g/m², such as from 25 g/m² to 100 g/m², more preferably from 25 g/m² to 80 g/m², in particular from 30 g/m² to 50 g/m². It was found that the cleaning capacity of the small first fibers is so high that it is sufficient to have a thin layer A.

In a preferred embodiment the layers A, B, C are arranged in the layer sequence ABC with at least one surface layer of the nonwoven composite fabric being formed by layer A; or the layers A, B, C are arranged in the layer sequence CAB with at least one surface layer of the nonwoven composite fabric being formed by layer B. From these two options arrangement ABC is preferred because the good cleaning properties of layer A come out very well.

In a preferred embodiment the layers A, B, C are arranged in the layer sequence ABC with at least one surface layer of the nonwoven composite fabric being formed by layer A. In this embodiment the scrim layer B is not the outer layer. However, due to its coarse fibers layer B is still able to structurally modify layer A and to produce a 3-D like structure on the surface of the composite. This is possible according to the invention because layer B is adjacent to layer A and since the fibers of the scrim are coarse. The coarse fibers allow the 3-D structure to be pressed through layer A.

Furthermore, for the layer sequence ABC it is particularly advantageous if layer A has a thickness below 1 mm, such as from 0.1 to 0.9 mm, preferably from 0.1 mm to 0.8 mm, in particular from 0.2 mm to 0.5 mm because it allows to use a relatively thick layer C and in addition it allows layer B to efficiently modify the structure of layer A. As explained above, the 3-D like structure on the surface of the composite is advantageous because it reduces adherence to the surface to be cleaned. For the same reason it is advantageous if the weight per unit area of layer A measured according to DIN EN ISO 9073-2:1997-02 is at most 100 g/m², such as from 25 g/m² to 100 g/m², more preferably from 25 g/m² to 80 g/m², in particular from 30 g/m² to 50 g/m².

Further advantageous of the layer sequence ABC is that since layer A forms at least one surface of the nonwoven composite fabric the excellent cleaning properties of the microfibers in layer A can be particularly good exploited.

Since layers A and B are adjacent to each other there is no intermediate layer between layers A and B. This is advantageous for the layer sequence ABC because layer B is not inhibited by any intermediate layer to structurally modify outer layer A. In a particularly preferred embodiment the layers A, B, C are arranged in the layer sequence ABC without any intermediate layer being between layer A and B and without any intermediate layer being between layer B and C. This is advantageous because it allows layer C to be relatively thick which in turn allows for sufficient absorbency without the overall structure being too thick.

In a further preferred embodiment the layers A, B, C are arranged in the layer sequence CAB with at least one surface layer of the nonwoven composite fabric being formed by layer B. In this embodiment the scrim layer B forms at least one surface layer and due to its 3-D like structure can efficiently reduce friction to the surface to be cleaned. Furthermore, since layer A is adjacent to layer B the microfilaments of layer A can penetrate the grid cells of layer B thereby modify the surface of the cleaning cloth and improve cleaning properties. Such penetration can be obtained efficiently if at least layers A and B, preferably all three layers A, B and C are combined to each other by entanglement, preferably hydroentanglement. Accordingly, in a preferred embodiment for a nonwoven composite fabric with the layer sequence CAB, layer B comprises first fibers of layer A.

Also, for the nonwoven composite fabric with the layer sequence CAB it is preferred if the thickness of layer A measured according to DIN EN ISO 9073-2:1997-02 is at most 1 mm, such as from 0.1 to 0.9 mm, preferably from 0.1 mm to 0.8 mm, in particular from 0.2 mm to 0.5 mm. Similarly, it is advantageous if the weight per unit area of layer A measured according to ISO 9073-1:1989-07 is at most 100 g/m², such as from 25 g/m² to 100 g/m², more preferably from 25 g/m² to 80 g/m², in particular from 30 g/m² to 50 g/m². As explained, this is advantageous because such a thin and light layer A allows to use a relatively thick layer C without having a too thick product as a whole. Having a relatively thick layer C improves the absorption properties of the nonwoven composite fabric. Also, for the nonwoven composite fabric with the layer sequence CAB it is advantageous if the weight per unit area of layer A measured according to ISO 9073-1:1989-07 is at most 100 g/m², more preferably from 25 g/m² to 100 g/m², in particular from 30 g/m² to 50 g/m².

Since layers A and B are adjacent to each other there is no intermediate layer between layers A and B. This is advantageous for the layer sequence CAB because the microfilaments of layer A are not inhibited by any intermediate layer to penetrate the grid cells of layer B e.g. during hydroentanglement. In a particularly preferred embodiment the layers A, B, C are arranged in the layer sequence CAB without any intermediate layer being between layer C and A and without any intermediate layer being between layer A and B. This is advantageous because, as explained before, it allows layer C to be relatively thick which in turn allows for sufficient absorbency without the overall structure being too thick.

In a preferred embodiment at least layers A and B, preferably all three layers A, B and C are combined to each other by entanglement, preferably hydroentanglement. Preferably the hydroentanglement is performed with a pressure of 100 bar to 300 bar (the pressure being measured in the hydroentanglement machine). In doing so simultaneously splitting of the melt-spun composite fibers of layer A and optionally of fibers of layer C, if they comprise melt-spun composite fibers, can be performed. Accordingly, in a preferred embodiment the first melt-spun composite filaments are splitted by hydroentanglement.

Preferably at least layers A and B, in particular all three layers A, B and C are combined to each other by hydroentenglement. Hydroentenglement is advantageously effected by impinging an optionally preconsolidated nonwoven composite comprising layer A and layer B, in particular comprising layer A, layer B and layer C, once on each side with high pressure water jets. Preferably, the water jets have a pressure of 100 to 300 bar. The pressure is measured in the hydroentanglement machine. The measurement can be done using integrated pressure sensors. Hydroentenglement makes for a particularly efficacious use of the small microfibers. This is in particular advantageous for layer structure CAB because here it is preferred that the small microfibers are at least partly transported through the grid layer B to modify the surface layer of the nonwoven composite fabric. Furthermore, the entanglement and splitting of fibers in layer A during hydroentanglement treatment helps the fibers of layer A to better take the grid shape of the grid layer.

In a preferred embodiment the nonwoven composite fabric comprises at least 70 wt.%, such as from 70 wt.% to 100 wt.%, preferably at least 80 wt.%, such as from 80 wt.% to 100 wt. %, in particular at least 95 wt.%, such as from 95 wt.% to 100 wt. %, polyester based on the total weight of the nonwoven composite fabric. This is advantageous because it improves recyclability of the nonwoven composite fabric.

According to the invention layer B is a grid comprising yarns having an average titer from 400 dtex to 2200 dtex, more preferably from 600 dtex to 2200 dtex, more preferably from 800 dtex to 2200 dtex, in particular from 1100 dtex to 2200 dtex.

Preferably, the grid is a woven or nonwoven grid fabric made of interlaced yarns that are arranged in a grid-like pattern. In a preferred embodiment the grid is a woven grid fabric. The yarns may form a regular or irregular pattern. Preferred are regular patterns. The patterns can be biaxial or triaxial. Preferred patterns are biaxial patterns such as rectangles, squares and/or rhombuses. Also possible are structures derived from rectangles, squares and/or rhombuses i.e. distorted rectangles, squares and/or rhombuses.

In a preferred embodiment the grid is a woven grid fabric with the woven structure being leno, plain, twill, satin, or jacquard. Preferably, the woven structure of the grid is leno, plain, twill, most preferably plain. Advantageous of a woven structure is its high stability. In a further embodiment the grid is a nonwoven grid fabric.

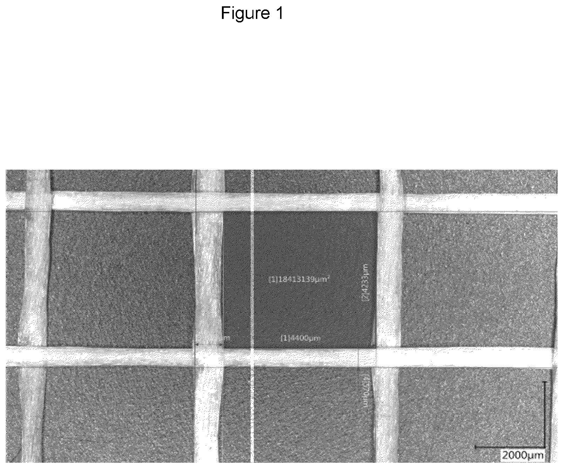

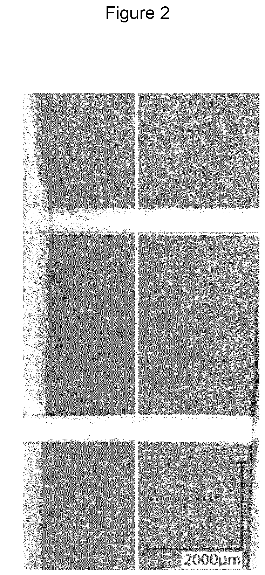

Figure 1 and Figure 2 show microscopic images of a woven grid fabric made of interlaced yarns. The woven structure is plain.

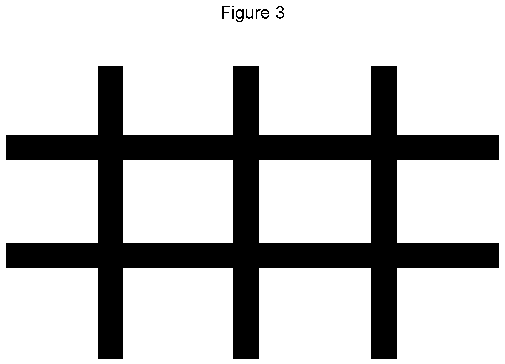

Figure 3 shows schematically the top view on an excerpt of a grid fabric.

The figures shall not restrict the invention.

The grid structure can be obtained by grid-laying the yarns. Preferably, the nonwoven grid fabric is consolidated. For this purpose, the yarns can be interlocked and bonded together by applying mechanical, heat and/or chemical processes to intersection points.

The grid is optionally coated, preferably with elastomeric or rubberized coatings. This increases the grid stability.

The term "yarn" is understood to be a continuous strand of staple and/or filament fibers arranged in a form suitable for weaving, knitting, or other form of fabric assembly. Preferably, the yarns comprise filaments. Structural integrity of the yarns can be obtained by adding a slight twist to the strand of fibers. Alternatively, structural integrity can be obtained by entanglement e.g. by an air jet. Preferred yarns comprise thermoplastic polymers, such as polyester, polyolefine and/or polyamide. Preferred polymers are polyester, in particular PET. Specifically the yarns consist of one or more of these polymers.

In one embodiment the grid has an average cell size from 3 mm² to 50 mm², preferably 4 mm² to 25 mm, more preferably 5 mm² to 20 mm, in particular 6.25 mm² to 16 mm².

The cell sizes are preferably measured with digital image analysis technique. This involves capturing a microscopic image of the textile grid and then processing it with a software that can identify the boundaries of the cells and calculate their dimensions. Preferably, the microscope image is calibrated by determining the scale of the image. For this purpose, a microscope slide with a scale etched on the surface can be used. Once the image is calibrated, it can be examined with image analysis software to measure the cell size.

In an embodiment of the invention the amount of the first fibers in layer A is at least 85 wt.%, more preferably, at least 90 wt.%, in particular at least 95 wt.%, with respect to the total weight of layer A.

In a further embodiment the amount of the yarns in layer B is at least 80 wt.%, more preferably at least 90 wt.%, in particular at least 95 wt.%, with respect to the total weight of layer B.

In a further embodiment of the invention the amount of the second fibers in layer C is at least 90 wt.%, more preferably at least 95 wt. %, in particular at least 98 wt. %, with respect to the total weight of layer C.

In a preferred embodiment the amount of the first fibers is 8 wt.% to 35 wt. %, preferably 8 wt.% to 20 wt.%, based on the total weight of the nonwoven composite fabric. It was found that for some applications it is advantageous if the amount of the first fibers is not below 8 wt.% based on the total weight of the nonwoven composite fabric because otherwise the cleaning capacity might not be sufficient. On the other hand, for some applications it is advantageous if the amount of the first fibers is not higher than 35 wt.% based on the total weight of the composite nonwoven fabric because otherwise the friction can be too high. This is particularly relevant for the layer sequence ABC. Accordingly, in a preferred embodiment the layers A, B, C are arranged in the layer sequence ABC and the amount of the first fibers is 8 wt.% to 35 wt.%, preferably 8 wt.% to 20 wt.% based on the total weight of the nonwoven composite fabric. In addition, also cleaning performance can be impacted negatively if the amount of the first fibers is too high, Finally, also the overall weight of the product could be too high because at least for some applications the amount of layer C should be high enough for sufficient absorption.

In a preferred embodiment the amount of the yarns of layer B is 10 wt.% to 30 wt. %, preferably 15 wt.% to 20 wt.% based on the total weight of the nonwoven composite fabric. It was found that for some applications it is advantageous if the amount of the yarns is not below 10 wt.% based on the total weight of the nonwoven composite fabric in order to properly prevent friction. On the other hand, the amount of the yarns preferably is not higher than 30 wt.% based on the total weight of the nonwoven composite fabric because otherwise the surface of the nonwoven composite fabric can be too abrasive and could damage the surface to be cleaned. Also, cleaning capacity might be not sufficient.

In a preferred embodiment the amount of the yarns of layer B is 55 wt.% to 75 wt.%, preferably 60 wt.% to 72 wt.% based on the total weight of layer A and B taken together.

In a preferred embodiment the amount of the yarns is 15 wt.% to 25 wt.%, preferably 19 wt. % to 22 wt.% based on the total weight of layer B and C taken together.

In a further preferred embodiment the amount of the second fibers 65 wt. % to 82 wt.%, preferably 75 wt.% to 80 wt.% based on the total weight of the nonwoven composite fabric. It was found that for some applications it is advantageous if the amount of the second fibers is not below 65 wt.% based on the total weight of the nonwoven composite fabric because otherwise the absorbance might be not sufficient for specific applications. On the other hand, for some applications it is advantageous if the amount of the second fibers is not higher than 82 wt.% based on the total weight of the composite nonwoven fabric because otherwise the cleaning capacity might not be sufficient.

According to the invention layer A is a first nonwoven fabric. Preferably, layer A is a first spunbond fabric, a first needlepunched fabric, a first spunlace fabric, a first wetlaid fabric or a first knitted fabric. In a particularly preferred embodiment layer A is a first spunbond fabric.

According to the invention, layer A comprises first fibers being first melt-spun composite fibers which are splitted to at least some extent to produce first elementary fibers having an average titer of at most 0.2 dtex. Preferably, the average titer of the first elementary fibers ranges from 0.05 dtex to 0.2 dtex, more preferably from 0.08 dtex to 0.19 dtex, more preferably from 0.1 dtex to 0.19 dtex, more preferably from 0.08 dtex to 0.15 dtex. Accordingly, the first fibers comprise fibers with a small titer. These small titer fibers are advantageous because, as explained above, they provide the nonwoven composite fabric with excellent capillarity in both directions i.e. in machine direction (MD) and in cross direction (CD), high water distribution capacity controlled moisture management and excellent cleaning performance.

The term "fibers" is understood to comprise both, filaments and staple fibers. Preferably, the first fibers and the second fibers are filaments. Further preferably, the yarns comprise filaments. The term "filaments" is understood to mean fibers which, in contrast to staple fibers (i.e. fibers with a specific length), have a theoretically unlimited length. According to the invention, filaments are preferred fibers because they allow for a longer distance water transport and a more uniform water flow as staple fibers.

In one embodiment at least one surface layer of the nonwoven composite fabric is formed by layer A with layer B being the adjacent layer. This allows the first fibers to be present on the surface of the nonwoven composite fabric which in turn is advantageous because the small fiber titer of the first elementary fibers enhances water transportation and cleaning capacity of the nonwoven composite fabric. These properties are particularly relevant at the surface of the nonwoven.

In a further embodiment at least one surface layer of the nonwoven composite fabric is formed by layer B with layer A being the adjacent layer. Due to the open grid structure of layer B some of the small first fibers can penetrate the grid and therefore reach the surface of the nonwoven composite fabric. Here they can enhance water transportation and cleaning capacity of the nonwoven composite fabric. Accordingly, it is advantageous if at least layers A and B, and preferably all layers A, B and C are bound by entanglement, preferably hydroentangelement. Preferably all layers A, B and C are bound by entanglement, in particular hydroentangelement because this improves stability of the composite. As explained by hydroentanglement simoultaneously splitting of the first elementary fibers can be performed.

In a further embodiment one surface layer of the nonwoven composite fabric is formed by layer A and the other surface layer of the nonwoven composite fabric is formed by layer C. In a further embodiment, one surface layer of the nonwoven composite fabric is formed by layer B and the other surface layer of the nonwoven composite fabric is formed by layer C.

The first fibers are first melt-spun composite fibers which are splitted to at least some extent to produce first elementary fibers, preferably first elementary filaments, having an average titer of at most 0.2 dtex. Due to the small titer of the first elementary fibers the layer A can be considered as microfiber layer. The composite fibers may have an average titer from 2 dtex to 3.5 dtex in the unsplitted state.

The second fibers can be second melt-spun composite fibers or monofibers each with an average titer from 0.25 dtex to 10 dtex, preferably from 0.25 dtex to 5 dtex, in particular from 2 to 5 dtex.

In a preferred embodiment, the second fibers are monofibers, preferably with an average titer from 0.25 to 10 dtex, more preferably from 3 to 10 dtex, in particular from 3 to 5 dtex.

In case the second fibers are melt-spun second composite fibers, the titer refers to the unsplitted fibers. This means that in case the second fibers are second melt-spun composite fibers, the unsplitted composite fibers have an average titer from 0.25 to 10 dtex, preferably from 0.25 to 5 dtex, in particular from 2 to 5 dtex.

In case the second fibers are second melt-spun composite fibers the second melt-spun composite preferably have an average titer from 0.25 to 5 dtex, preferably from 2 to 5 dtex, in particular from 2 to 3.5 dtex, and are preferably splitted to at least some extent to produce second elementary fibers, preferably second elementary filaments. Preferably, the titer of the second elementary fibers is from 0.1 to 0.25 dtex, more preferably from 0.1 to 0.15 dtex. However, in case the second fibers are second melt-spun composite fibers their splitting degree is preferably at most 10 %, more preferably at most 5 %. This is advantageous to keep the layer C open enough. Nevertheless, it is preferred that the second composite fibers are at least partially splitted. Preferably, the splitting degree of the second composite fibers is at least 1 %, such as 1 to 10 %, more preferably 1 to 5 %. This is advantageous because the presence of the small elementary fibers also in layer C improves the adhesion between layer A and layer C or between layer B and layer C due to a better entanglement.

Advantageous of using monofibers as second fibers is that layer C has a very high absorbancy. **In** addition it is advantageous for recyclability.

**In** one embodiment as well the first fibers as the second fibers are melt-spun composite fibers which are splitted to at least some extent to produce elementary fibers.

**In** a further preferred embodiment all three layers A, B and C are combined to each other by entanglement, preferably hydroentanglement. **In** case the second fibers are melt-spun composite fibers, preferably the splitting degree of the second melt-spun composite fibers is 1 to 10 %, more preferably 1 to 5 %. However, it is possible in further embodiments that the splitting degree of the second melt-spun composite fibers is higher, e.g. at least 85 %, more preferably at least 95 %, in particular at least 98 %.

Preferably, the splitting degree of the first composite fibers is at least 85 %, more preferably at least 95 %, in particular at least 98 %. Preferably, the splitting degree of the second composite fibers is lower than the splitting degree of the first composite fibers. This can be achieved for example by adjusting the power of the water jets so that outer layer C is subjected to lower water jet pressure than the other side.

In a further preferred embodiment all three layers A, B and C are combined to each other by entanglement, preferably hydroentanglement and the splitting degree of the second composite fibers is lower than the splitting degree of the first composite fibers.

The splitting degree of the fibers can be measured optically through a microscopic image (magnification 750) of the cross sectional cut of the nonwoven. Partially splitted fibers are considered as unsplitted fibers. At least 10 microscopic images shall be made and examined, and the average splitting degree shall be taken.

An advantage of using composite fibers as the starting material to produce the elementary fibers is that the titer of the elementary fibers produced therefrom can be easily adjusted by varying the number of the elementary fibers contained in the composite fibers. Here, the titer of the composite fibers can remain constant, which is advantageous from a procedural point of view. A further advantage of using the composite fibers is that by varying the degree of splitting of the composite fibers, it is possible to easily control the ratio of relatively thick and relatively thin fibers in the microfiber composite fabric.

Composite fibers comprise at least two elementary fibers and can be splitted. Such splitting can be performed by customary splitting methods, such as hydroentanglement. Preferably, the first fibers and optionally the second fibers are splitted by water-jets. Upon hydroentanglement simultaneously bonding of the elementary fibers takes place.

Preferably, the first fibers are composite fibers which have been splitted by water jets. Further preferably, layer A and layer B have been joined to each other by entanglement, preferably hydroentanglement whereby simultaneously the first fibers have been splitted. Further preferably, the layer A and the layer C have been joined to each other by hydroentanglement whereby simultaneously the first fibers have been splitted. Most preferably, all three layers A, B and C have been joined to each other by entanglement, preferably hydroentanglement whereby simultaneously the first fibers have been splitted.

In a preferred embodiment the first fibers of layer A have at least partially penetrated the grid cells of the layer B and/or the pores of layer C and are at least partly intertwined with the yarns of layer B and/or the second fibers of layer C ("tentacle effect"). This effect can be achieved, for example, by first forming a layer composite AB or CA or also larger layer composites, for example a layer composite ABC, CAB from layer(s) A, layer(s) B and layer(s) C wherein layer A and/or layer C are initially still unconsolidated or merely preconsolidated, and then carrying out an hydroentanglement step for the entire layer composite.

In this procedure, the fibers of layer A can be distributed in the Z-direction, i.e., in the direction of the cross-section of the microfiber composite. This distribution may comprise several layers and lead to a particularly intensive bonding of the individual layers. Practical tests have shown that the finer the fibers, the further they are transported into the other layers.

By splitting the first and optionally the second melt-spun composite fibers elementary fibers are formed. In this respect, the elementary fibers can be formed in the shape of a segment of a circle, or n-angled or multi-lobally in cross section.

The nonwoven composite fabric is preferably one in which the first composite fibers and optionally the second composite fibers have a cross section having a multisegmented structure like orange segments, also known as "pie", where the segments can contain different, alternating, incompatible polymers. Hollow pie structures are also suitable, which can also have an asymmetrically axially extending cavity. Pie structures, in particular hollow pie structures, can be split particularly easily. Hollow pie structures are also suitable, which can also have an asymmetrically axially extending cavity.

In this respect, the pie arrangement advantageously has 2, 4, 8, 16, 24, 32, 48 or 64 segments, preferably 4, 8, 16, 24, 32 segments, in particular 4, 8, 16, 32 segments. In a particularly preferred embodiment the first fibers, and optionally the second composite fibers, are first melt-spun composite fibers with a pie arrangement that has 16 or 24 segments. This is advantageous over a PIE 32 structure because 16 or 24 segments are easier to be produced.

To achieve easy splitability, it is advantageous if the first composite fibers and optionally the second composite fibers contain at least two thermoplastic polymers. The composite fibers preferably comprise at least two incompatible polymers. The term "incompatible polymers" is understood to mean polymers which, when combined, produce non-adhering, partially or difficultly adhering pairings. A composite fiber of this type has good splitability into elementary fibers and produces a favorable ratio of strength to weight per unit area. Partially or difficultly adhering pairings are present when the composite fibers having these pairings split more easily than in the case of a composite fiber which consists of only one of the polymers used.

Polyolefins, polyesters, polyamides and/or polyurethanes are preferably used as incompatible polymer pairs in such a combination that non-adhering, partially or difficultly adhering pairs are produced.

The polymer pairs which are used are particularly preferably selected from polymer pairs having at least one first polyolefin, preferably polypropylene, and/or at least one polyamide, preferably polyamide 6, on the one hand, and at least one second polyolefin, preferably polypropylene or at least one polyester, preferably polyethylene terephthalate, on the other hand.

Polymer pairs having polypropylene, such as polypropylene/polyethylene, polypropylene/polyamide 6, and/or polypropylene/polyethylene terephthalate are particularly preferred.

Polymer pairs having at least one polyester, preferably polyethylene terephthalate and/or at least one polyamide, preferably polyamide 6, are also particularly preferred.

Polymer pairs having at least one polyamide and/or having at least one polyethylene terephthalate are preferably used due to their limited adhesiveness and polymer pairs having at least one polyolefin are particularly preferably used due to their poor adhesiveness.

The following have proven to be particularly expedient as particularly preferred components: polyesters, preferably polyethylene terephthalate, polylactic acid and/or polybutylene terephthalate, on the one hand, polyamide, preferably polyamide 6, polyamide 66, polyamide 46, on the other hand, optionally combined with one or more further polymers that are incompatible with the above-mentioned components, preferably selected from polyolefins. This combination has outstanding splitability. The combination of polyethylene terephthalate and polyamide 6 or of polyethylene terephthalate and polyamide 66 is very particularly preferred.

Options for producing microfilament layers of split composite fibers are known to a person skilled in the art and are described, for example, in EP 0814188 A1 and EP 1619283 A1.

In one embodiment at least one surface layer(s) of the nonwoven composite fabric is formed by layer A. This allows for the average titer of the fibers on at least one surface layer being smaller than the average titer in at least one inner layer because layer A comprises elementary fibers having an average titer of at most than 0.2 dtex, whereas layer B and layer C comprise fibers with a higher titer.

In a further preferred embodiment of the invention the nonwoven composite fabric has a thickness measured according to DIN EN ISO 9073-2:1997-02 from 0.8 mm to 6 mm, preferably from1.0 mm to 6 mm, more preferably from 1.2 mm to 6 mm, preferably from 1.5 mm to 4 mm, in particular from 1.5 mm to 3 mm.

In a further preferred embodiment of the invention layer B has a thickness measured according to DIN EN ISO 9073-2:1997-02 from 0.1 mm to 0.8 mm, preferably from 0.15 mm to 0.5 mm, in particular from 0.2 to 0.4 mm.

In a further preferred embodiment the nonwoven composite fabric is produced on the basis of a starting layer B having a thickness measured according to DIN EN ISO 9073-2:1997-02 from 0.1 mm to 0.8 mm, preferably from 0.15 mm to 0.5 mm, in particular from 0.2 to 0.4 mm.

In a further preferred embodiment of the invention layer C has a thickness measured according to DIN EN ISO 9073-2:1997-02 from 0.2 mm to 3.5 mm, preferably from 0.5 mm to 3 mm, more preferably from 1.5 mm to 3 mm, in particular from 2 mm to 3 mm.

In a further preferred embodiment the nonwoven composite fabric is produced on the basis of a starting layer C having a thickness measured according to DIN EN ISO 9073-2:1997-02 from 0.2 mm to 3.5 mm, preferably from 0.5 mm to 3 mm, more preferably from 1.5 mm to 3 mm, in particular from 2 mm to 3 mm.

In a further preferred embodiment of the invention layer B has a weight per unit area measured according to ISO 9073-1:1989-07 from 40 g/m² to 90 g/m², preferably from 60 g/m² to 80 g/m².

In a further preferred embodiment of the invention layer C has a weight per unit area measured according to ISO 9073-1:1989-07 from 30 g/m² to 400 g/m², preferably from 100 g/m² to 400 g/m², in particular from 120 g/m² to 280 g/m².

In a further preferred embodiment of the invention the nonwoven composite fabric has a weight per unit area measured according to ISO 9073-1:1989-07 from 95 g/m² to 600 g/m², preferably from 200 g/m² to 400 g/m².

In a further preferred embodiment of the invention the splitting degree of the first fibers is at least 85%, more preferably at least 95%, in particular at least 98%. This embodiment is advantageous because hereby capillarity, water transportation, in particular water distribution capacity and controlled moisture management is high. It is further preferred that the content of the first elementary fibers of layer A is from 85 wt.% to 100 wt.%, more preferably from 95 wt.% to 100 wt.%, in particular from 98 wt.% to 100 wt.%, based on the total weight of layer A. It is further preferred that the content of the first elementary fibers of layer A is from 8 wt.% to 35 wt.%, more preferably from 8 wt. % to 20 wt. %, in particular from 9 wt. % to 15 wt. %, based on the total weight of the nonwoven composite fabric.

**In** a preferred embodiment the content of second elementary fibers of layer C, if present, is below 10 wt. %, preferably from 1 to 10 wt. %, more preferably from 1 wt. % to 5 wt.%, based on the total weight of layer C.

Layer C can be selected from a second nonwoven fabric, such as a second spunbond fabric, a second needle-punched fabric, a second spunlace fabric, and second wetlaid nonwoven fabrics, wovens, such as microfiber based wovens or not microfiber based wovens, knitted fabrics such as microfiber based knitted fabrics or not microfiber based knitted fabrics. Preferably, layer C is a second nonwoven fabric, in particular a second spunbond fabric.

As mentioned above, it is preferred that layer A and layer B or layer A and layer C are joined to each other by entanglement, preferably by hydroentanglement. Most preferably, all layers A, B and C are joined to each other by entanglement, in particular by hydroentanglement. This is advantageous because it stabilizes the nonwoven composite fabric.

In a simple embodiment of the invention, the nonwoven composite fabric consists only of one layer A, one layer B and one layer C. This means that except layers A, B and C the nonwoven composite fabric does not comprise any further layers. However, to optimize the properties, it can be advantageous if layers A and B are integrated in a multi-layered material. Accordingly, in a preferred embodiment the nonwoven composite fabric comprises more than one layer A, more than one layer B, more than one layer C and/or further layers which are different from layer A, B or C. What is said herein in relation to layer A, B and C shall also apply to any further layer A, B and C.

In an embodiment the nonwoven composite fabric comprises in addition to layer C at least one further layer C. What is said herein in relation to layer C shall also apply to further layer C. In a nonwoven composite fabric comprising as well at least one layer C as at least one further layer C the structure of both layers C can be chosen independently from another.

Further layers which are different from layer A, B or C can be selected from further nonwoven fabrics, such as further spunbond, needle-punched, spunlace, and wetlaid nonwoven fabrics, wovens, such as microfiber based wovens or not microfiber based wovens, knitted fabrics such as microfiber based knitted fabrics or not microfiber based knitted fabrics.

In a preferred embodiment the nonwoven composite fabric comprises an attachment layer D as further layer. Through attachment layer D the nonwoven composite fabric can be attached to the frame of a cleaning tool, preferably of a flat wiper. In one embodiment, the layer D is formed in such a way that it can be attached to a frame comprising two wings. For this purpose, preferably the layer D has a pocket shape, more preferably a double pocket shape. Also preferably, the layer D comprises at least two sublayers which are partly adhered at the edges thereby forming a pocket shape, preferably a double pocket shape. In a preferred embodiment attachment layer D is arranged on layer C. Preferably, layer D is adjacent to layer C. However, in another embodiment it is possible that there are intermediate layers between layer D and layer C.

In a preferred embodiment the attachment layer D is made of a hydrophobic textile fabric. Preferably, attachment layer D is a hydrophobic nonwoven fabric, in particular made of a thermoplastic polymer such as polypropylene and/or polyethylene.

In a further preferred embodiment the nonwoven composite fabric has through-pores. They can be formed by water jets and facilitate water permeability.

In a preferred embodiment the nonwoven composite fabric is manufactured by a method comprising
A) providing layer A being a first nonwoven fabric and comprising first fibers, preferably first filaments, being first melt-spun composite fibers which are splittable to at least some extent to produce first elementary fibers having an average titer of at most 0.2 dtex;
B) providing layer B being a grid comprising yarns having an average titer from 400 dtex to 2200 dtex, more preferably from 600 dtex to 2200 dtex, preferably from 800 dtex to 2200 dtex, in particular from 1100 dtex to 2200 dtex;
C) providing layer C being a textile fabric that comprises second fibers, preferably second filaments with an average titer from 0.25 to 10 dtex, preferably 0.25 to 5 dtex;
D) positioning layers A, B and preferably C one on top of the other to give a composite, so that layers A and B are adjacent to each other and at least one surface layer of the composite is formed by layer A or layer B,
E) treating layers A and B and preferably C with water jets, whereby at least the first fibers are entangled and splitted at least to some extent to produce elementary fibers having an average titer of at most 0.2 dtex to give a consolidated composite,
F) optionally layer C is joined to the consolidated composite formed in step E,
G) whereby a nonwoven composite fabric is obtained.

Step E) is performed after step D.

In step F) optionally layer C is joined to the consolidated composite formed in step E. This step is applicable in particular if in step D layers A, B but no layer C are positioned one on top of the other.

In a preferred embodiment in step D) layers A and B and C are positioned one on top of the other. This allows a one step production of the nonwoven composite fabric.

In a preferred embodiment in step E the layers A and B and optionally C are joined to each other through the treatment with water jets.

In a preferred embodiment the nonwoven composite fabric produced by the inventive process is a nonwoven composite fabric according to one or more of the embodiments described herein.

The inventive nonwoven composite fabric is particularly well suited for cleaning. Therefore, in a particularly preferred embodiment the inventive nonwoven composite fabric is used as a cleaning article, preferably as a cleaning cloth, in particular as a floor cleaning cloth.

The present invention specifically relates to the use of a nonwoven composite fabric according to one or more of the embodiments described herein as cleaning article, preferably as a cleaning cloth, in particular as a floor cleaning cloth. Preferably, during the use layer A or layer B, preferably layer A is in contact to the surface to be cleaned, in particular to the floor.

The present invention further relates to a method of cleaning comprising the following steps:
A') providing a cleaning device, in particular a flat wiper, comprising a nonwoven composite fabric according to one or more of the embodiments described herein,
B') cleaning a surface with the cleaning device wherein layer A or layer B, preferably layer A, of the nonwoven composite fabric is in contact to the surface to be cleaned.

Preferably, the surface to be cleaned is a flat surface, in particular a floor. Further, preferably, during the use layer A is in contact to the surface to be cleaned.

The present invention also relates to a cleaning device, in particular a flat wiper comprising a nonwoven composite fabric according to one or more of the embodiments described herein.

In the following the invention is further described by the following Examples which are only exemplarily and shall not restrict the scope of the invention.

### Example 1 Preparation of inventive composite nonwoven fabric 1

Inventive composite nonwoven fabric 1 is produced using the following starting materials:
a) Layer A: consisting of first filaments, being first melt-spun composite filaments with a titer of 0.1 dtex. The weight per unit area of layer A is 30 g/m².
b) Grid layer B: consisting of yarns having an average titer of 1100 dtex. The weight per unit area of layer B is 70 g/m².
c) Absorbant layer C: consisting of second filaments being composite filaments with an average titer of 2,5 dtex, wherein the weight per unit area of layer C is 240 g/m²

Layers A, B and C are positioned one on top of the other, thereby forming layer structure ABC.

The composite ABC is treated with water jets whereby the first fibers are entangled and splitted to more than 90% to produce first elementary filaments having an average titer of 0.15 dtex and whereby the second fibers are entangled and splitted to less than 5 %. Further, the first fibers of layer A at least partially penetrate into the pores of the layer B and at least partly intertwine with the second fibers of layer B ("tentacle effect").

The resulting composite nonwoven fabric 1 has a thickness of 2 mm measured according to DIN EN ISO 9073-2:1997-02. In the composite nonwoven fabric the thickness of layer A is 0.3 mm. The thickness of layer B is 0.4 mm. The thickness of layer C is 1.3 mm.

The inventive composite nonwoven 1 shows good cleaning performance, in particular high capillarity, rapid water uptake and distribution capacity with low adherence to the surface to be cleaned.

### Example 2 Preparation of inventive composite nonwoven fabric 2

Inventive composite nonwoven fabric 2 is produced according to Example 1. However, for layer C monofilaments with a titer of 4 dtex are used. The thickness of layer C is 0.3 mm. The resulting thickness of the composite nonwoven fabric is 1 mm.

Also, the inventive composite nonwoven 2 shows good cleaning performance, in particular high capillarity, rapid water uptake and distribution capacity with low adherence to the surface to be cleaned.

### Example 3: Preparation of inventive composite nonwoven fabric 3

Inventive composite nonwoven fabric 3 is produced according to Example 1. However, layers A, B and C are positioned one on top of the other to form layer structure BAC.

Also the inventive composite nonwoven 3 shows good cleaning performance, in particular high capillarity, rapid water uptake and distribution capacity with low adherence to the surface to be cleaned.

### Example 4: Preparation of inventive composite nonwoven fabric 4

Inventive composite nonwoven fabric 4 is produced according to Example 1. A further layer (attachment layer D) which has a double pocket shape is connected to layer C.

Also the inventive composite nonwoven 4 shows good cleaning performance, in particular high capillarity, rapid water uptake and distribution capacity with low adherence to the surface to be cleaned.

## Claims

1. Nonwoven composite fabric comprising layer A, layer B and layer C, wherein
a) layer A is a first nonwoven fabric and comprises first fibers, preferably first melt-spun composite filaments, which are splitted to at least some extent to produce first elementary fibers, preferably first elementary filaments, having an average titer of at most 0.2 dtex;
b) layer B is a grid comprising yarns having an average titer from 400 dtex to 2200 dtex, preferably from 800 dtex to 2200 dtex, in particular from 1100 dtex to 2200 dtex,
c) layer C is a textile fabric that comprises second fibers, preferably second filaments with an average titer from 0.25 to 10 dtex, preferably 0.25 to 5 dtex
wherein layers A and B are adjacent to each other, and wherein at least one surface layer of the nonwoven composite fabric is formed by layer A or layer B.

2. Nonwoven composite fabric according to claim 1 wherein the layers A, B, C are arranged in the layer sequence ABC with at least one surface layer of the nonwoven composite fabric being formed by layer A, or the layers A, B, C are arranged in the layer sequence CAB with at least one surface layer of the nonwoven composite fabric being formed by layer B.

3. Nonwoven composite fabric according to claim 1 or 2 wherein
the thickness of layer A measured according to DIN EN ISO 9073-2:1997-02 is below 1 mm, such as from 0.1 to 0.9 mm and/or the weight per unit area of layer A measured according to ISO 9073-1:1989-07 is at most 100 g/m², such as from 25 g/m² to 100 g/m².

4. Nonwoven composite fabric according to one or more of claims 1 to 3 wherein at least layers A and B, preferably all three layers A, B and C are combined to each other by entanglement, preferably hydroentanglement.

5. Nonwoven composite fabric according to one or more of claims 1 to 4 wherein the grid is a woven grid fabric.

6. Nonwoven composite fabric according to one or more of claims 1 to 5 wherein the grid has an average cell size from 3 mm² to 50 mm², preferably, 4 mm² to 25 mm².

7. Nonwoven composite fabric according to one or more of claims 1 to 6 wherein the amount of the first fibers is 8 wt.% to 35 wt.%, preferably 8 wt.% to 20 wt.% based on the total weight of the nonwoven composite fabric.

8. Nonwoven composite fabric according to one or more of claims 1 to 7 wherein the second fibers are monofibers.

9. Nonwoven composite fabric according to one or more of claims 1 to 8 wherein the amount of the yarns of layer B is 10 wt. % to 30 wt. %, preferably 15 wt. % to 20 wt.% based on the total weight of the nonwoven composite fabric.

10. Nonwoven composite fabric according to one or more of claims 1 to 9 wherein the amount of the first fibers is 8 wt.% to 35 wt.%, the amount of the yarns of layer B is 10 wt.% to 30 wt.%, and the amount of the second fibers is 65 wt.% to 82 each based on the total weight of the nonwoven composite fabric.

11. Method for manufacturing a nonwoven composite fabric according to one or more of the preceeding claims comprising the following steps
A) providing layer A being a first nonwoven fabric and comprising first fibers, preferably first filaments, being first melt-spun composite fibers which are splittable to at least some extent to produce first elementary fibers having an average titer of at most 0.2 dtex;
B) providing layer B being a grid comprising yarns having an average titer from 400 dtex to 2200 dtex, preferably from 800 dtex to 2200 dtex, in particular from 1100 dtex to 2200 dtex;
C) providing layer C being a textile fabric that comprises second fibers, preferably second filaments with an average titer from 0.25 to 10 dtex, preferably 0.25 to 5 dtex;
D) positioning layers A, B and preferably C one on top of the other to give a composite, so that layers A and B are adjacent to each other and at least one surface layer of the composite is formed by layer A or layer B,
E) treating layers A and B and preferably C with water jets, whereby at least the first fibers are entangled and splitted at least to some extent to produce elementary fibers having an average titer of at most 0.2 dtex to give a consolidated composite,
F) optionally layer C is joined to the consolidated composite formed in step E,
G) whereby a nonwoven composite fabric is obtained.

12. Use of a nonwoven composite fabric according to one or more of the claims 1 to 11 as cleaning article wherein preferably, during the use layer A or layer B is in contact to the surface to be cleaned.

13. Method of cleaning comprising the following steps:
A') providing a cleaning device comprising a nonwoven composite fabric according to one or more of the claims 1 to 11,
B') cleaning a surface with the cleaning device wherein layer A or layer B, preferably layer A, of the nonwoven composite fabric is in contact to the surface to be cleaned.

14. Method of cleaning according to claim 13 wherein the surface to be cleaned is a flat surface, in particular a floor.

15. Cleaning device, in particular a flat wiper comprising a nonwoven composite fabric according to one or more of claims 1 to 10.

## Patentansprüche

1. Verbundvliesstoff, umfassend Schicht A, Schicht B und Schicht C, wobei
a) Schicht A ein erster Vliesstoff ist und erste Fasern umfasst, vorzugsweise erste schmelzgesponnene Verbundfilamente, die in mindestens einem gewissen Ausmaß aufgespalten sind, um erste Elementarfasern, vorzugsweise erste Elementarfilamente, mit einem durchschnittlichen Titer von höchstens 0,2 dtex zu produzieren;
b) Schicht B ein Gitter ist, umfassend Garne mit einem durchschnittlichen Titer von 400 dtex bis 2200 dtex, vorzugsweise von 800 dtex bis 2200 dtex, insbesondere von 1100 dtex bis 2200 dtex;
c) Schicht C ein Textilstoff ist, der zweite Fasern, vorzugsweise zweite Filamente mit einem durchschnittlichen Titer von 0,25 bis 10 dtex, vorzugsweise 0,25 bis 5 dtex umfasst;
wobei die Schichten A und B benachbart zueinander sind, und wobei mindestens eine Oberflächenschicht des Verbundvliesstoffs durch Schicht A oder Schicht B gebildet wird.

2. Verbundvliesstoff nach Anspruch 1, wobei die Schichten A, B, C in der Schichtabfolge ABC angeordnet sind, wobei mindestens eine Oberflächenschicht des Verbundvliesstoffs durch Schicht A gebildet wird, oder die Schichten A, B, C in der Schichtabfolge CAB angeordnet sind, wobei mindestens eine Oberflächenschicht des Verbundvliesstoffs durch Schicht B gebildet wird.

3. Verbundvliesstoff nach Anspruch 1 oder 2 wobei die Dicke von Schicht A, gemessen gemäß DIN EN ISO 9073-2:1997-02, unter 1 mm liegt, wie von 0,1 bis 0,9 mm, und/oder das Gewicht pro Flächeneinheit von Schicht A, gemessen gemäß ISO 9073-1:1989-07, höchstens 100 g/m² beträgt, wie von 25 g/m² bis 100 g/m².

4. Verbundvliesstoff nach einem oder mehreren der Ansprüche 1 bis 3, wobei mindestens Schichten A und B, vorzugsweise alle drei Schichten A, B und C, miteinander durch Verhakung kombiniert sind, vorzugsweise durch Wasserstrahlverfestigung.

5. Verbundvliesstoff nach einem oder mehreren der Ansprüche 1 bis 4, wobei das Gitter ein gewebter Gitterstoff ist.

6. Verbundvliesstoff nach einem oder mehreren der Ansprüche 1 bis 5, wobei das Gitter eine durchschnittliche Zellengröße von 3 mm² bis 50 mm², vorzugsweise 4 mm² bis 25 mm² aufweist.

7. Verbundvliesstoff nach einem oder mehreren der Ansprüche 1 bis 6, wobei die Menge der ersten Fasern 8 Gew.-% bis 35 Gew.-%, vorzugsweise 8 Gew.-% bis 20 Gew.-% beträgt, bezogen auf das Gesamtgewicht des Verbundvliesstoffs.

8. Verbundvliesstoff nach einem oder mehreren der Ansprüche 1 bis 7, wobei die zweiten Fasern Monofasern sind.

9. Verbundvliesstoff nach einem oder mehreren der Ansprüche 1 bis 8, wobei die Menge der Garne von Schicht B 10 Gew.-% bis 30 Gew.-%, vorzugsweise 15 Gew.-% bis 20 Gew.-% beträgt, bezogen auf das Gesamtgewicht des Verbundvliesstoffs.

10. Verbundvliesstoff nach einem oder mehreren der Ansprüche 1 bis 9, wobei die Menge der ersten Fasern 8 Gew.-% bis 35 Gew.-% beträgt, die Menge der Garne von Schicht B 10 Gew.-% bis 30 Gew.-% beträgt, und die Menge der zweiten Fasern 65 Gew.-% bis 82 beträgt, jeweils bezogen auf das Gesamtgewicht des Verbundvliesstoffs.

11. Verfahren zum Fertigen eines Verbundvliesstoffs gemäß einem oder mehreren der vorhergehenden Ansprüche, umfassend die folgenden Schritte:
A) Bereitstellen von Schicht A, die ein erster Vliesstoff ist und erste Fasern umfasst, vorzugsweise erste Filamente, die erste schmelzgesponnene Verbundfasern sind, die in mindestens einem gewissen Ausmaß aufspaltbar sind, um erste Elementarfasern mit einem durchschnittlichen Titer von höchstens 0,2 dtex zu produzieren;
B) Bereitstellen von Schicht B, die ein Gitter ist, umfassend Garne mit einem durchschnittlichen Titer von 400 dtex bis 2200 dtex, vorzugsweise von 800 dtex bis 2200 dtex, insbesondere von 1100 dtex bis 2200 dtex;
C) Bereitstellen von Schicht C, die ein Textilstoff ist, der zweite Fasern, vorzugsweise zweite Filamente mit einem durchschnittlichen Titer von 0,25 bis 10 dtex, vorzugsweise 0,25 bis 5 dtex umfasst;
D) Positionieren der Schichten A, B und vorzugsweise C eine auf der anderen, um einen Verbund zu ergeben, so dass Schichten A und B sich benachbart zueinander befinden und mindestens eine Oberflächenschicht des Verbunds durch Schicht A oder Schicht B gebildet wird;
E) Behandeln der Schichten A und B und vorzugsweise C mit Wasserstrahlen, wodurch mindestens die ersten Fasern sich verhaken und mindestens in gewissem Ausmaß aufgespalten werden, um Elementarfasern mit einem durchschnittlichen Titer von höchstens 0,2 dtex zu ergeben, um einen konsolidierten Verbund zu ergeben;
F) gegebenenfalls Schicht C an den in Schritt E gebildeten konsolidierten Verbund angefügt wird;
G) wodurch ein Verbundvliesstoff erhalten wird.

12. Verwendung eines Verbundvliesstoffs nach einem oder mehreren der Ansprüche 1 bis 11 als Reinigungsartikel, wobei vorzugsweise während der Verwendung Schicht A oder Schicht B in Kontakt mit der zu reinigenden Oberfläche ist.

13. Verfahren zum Reinigen, umfassend die folgenden Schritte:
A') Bereitstellen einer Reinigungsvorrichtung, umfassend einen Verbundvliesstoff gemäß einem oder mehreren der Ansprüche 1 bis 11,
B') Reinigen einer Oberfläche mit der Reinigungsvorrichtung, wobei Schicht A oder Schicht B, vorzugsweise Schicht A, des Verbundvliesstoffs in Kontakt mit der zu reinigenden Oberfläche ist.

14. Verfahren zum Reinigen nach Anspruch 13, wobei die zu reinigende Oberfläche eine flache Oberfläche ist, insbesondere ein Boden.

15. Reinigungsvorrichtung, insbesondere ein Flachwischer, umfassend einen Verbundvliesstoff gemäß einem oder mehreren der Ansprüche 1 bis 10.

## Revendications

1. Non-tissé composite comprenant une couche A, une couche B et une couche C, dans lequel
a) la couche A est un premier non-tissé et comprend de premières fibres, de préférence de premiers filaments composites filés à chaud, qui sont divisés au moins jusqu'à un certain point pour produire de premières fibres élémentaires, de préférence de premiers filaments élémentaires, ayant un titre moyen de 0,2 dtex maximum ;
b) la couche B est un treillis comprenant des fils ayant un titre moyen allant de 400 dtex à 2200 dtex, de préférence de 800 dtex à 2200 dtex, en particulier de 1100 dtex à 2200 dtex ;
c) la couche C est un textile qui comprend de deuxièmes fibres, de préférence de deuxièmes filaments avec un titre moyen allant de 0,25 à 10 dtex, de préférence de 0,25 à 5 dtex,
dans lequel les couches A et B sont adjacentes, et dans lequel au moins une couche de surface du non-tissé composite est formée par la couche A ou la couche B.

2. Non-tissé composite selon la revendication 1 dans lequel les couches A, B, C sont disposées selon la séquence de couches ABC avec au moins une couche de surface du non-tissé composite formée par la couche A, ou bien les couches A, B, C sont disposées selon la séquence de couches CAB avec au moins une couche de surface du non-tissé composite formée par la couche B.

3. Non-tissé composite selon la revendication 1 ou 2 dans lequel
l'épaisseur de la couche A mesurée conformément à la norme DIN EN ISO 9073-2:1997-02 est inférieure à 1 mm, par exemple de 0,1 à 0,9 mm et/ou la masse surfacique de la couche A mesurée conformément à la norme ISO 9073-1:1989-07 est de 100 g/m² maximum, par exemple de 25 g/m² à 100 g/m².

4. Non-tissé composite selon une ou plusieurs des revendications 1 à 3 dans lequel au moins les couches A et B, de préférence l'ensemble des trois couches A, B et C sont combinées entre elles par enchevêtrement, de préférence par hydro-enchevêtrement.

5. Non-tissé composite selon une ou plusieurs des revendications 1 à 4 dans lequel le treillis est un treillis tissé.

6. Non-tissé composite selon une ou plusieurs des revendications 1 à 5 dans lequel le treillis a une taille moyenne de cellules de 3 mm² à 50 mm², de préférence de 4 mm² à 25 mm².

7. Non-tissé composite selon une ou plusieurs des revendications 1 à 6 dans lequel la quantité des premières fibres est de 8 % en poids à 35 % en poids, de préférence de 8 % en poids à 20 % en poids, rapporté au poids total du non-tissé composite.

8. Non-tissé composite selon une ou plusieurs des revendications 1 à 7 dans lequel les deuxièmes fibres sont des monofibres.

9. Non-tissé composite selon une ou plusieurs des revendications 1 à 8 dans lequel la quantité des fils de la couche B est de 10 % en poids à 30 % en poids, de préférence de 15 % en poids à 20 % en poids, rapporté au poids total du non-tissé composite.

10. Non-tissé composite selon une ou plusieurs des revendications 1 à 9 dans lequel la quantité des premières fibres est de 8 % en poids à 35 % en poids, la quantité des fils de la couche B est de 10 % en poids à 30 % en poids, et la quantité des deuxièmes fibres est de 65 % en poids à 82, chacune rapportée au poids total du non-tissé composite.

11. Procédé destiné à fabriquer un non-tissé composite selon une ou plusieurs des revendications précédentes, comprenant les étapes suivantes :
A) obtention d'une couche A qui est un premier non-tissé et comprend de premières fibres, de préférence de premiers filaments, qui sont de premières fibres composites filées à chaud et qui peuvent être divisées au moins jusqu'à un certain point pour produire de premières fibres élémentaires ayant un titre moyen de 0,2 dtex maximum ;
B) obtention d'une couche B qui est un treillis comprenant des fils ayant un titre moyen allant de 400 dtex à 2200 dtex, de préférence de 800 dtex à 2200 dtex, en particulier de 1100 dtex à 2200 dtex ;
C) obtention d'une couche C qui est un textile qui comprend de deuxièmes fibres, de préférence de deuxièmes filaments avec un titre moyen allant de 0,25 à 10 dtex, de préférence de 0,25 à 5 dtex ;
D) positionnement des couches A, B et de préférence C les unes au-dessus des autres pour obtenir un composite, de telle sorte que les couches A et B soient adjacentes et qu'au moins une couche de surface du composite soit formée par la couche A ou la couche B ;
E) traitement des couches A et B et de préférence C avec des jets d'eau, moyennant quoi au moins les premières fibres sont enchevêtrées et divisées au moins jusqu'à un certain point pour produire des fibres élémentaires ayant un titre moyen de 0,2 dtex maximum, afin d'obtenir un composite consolidé ;
F) éventuellement, la couche C est assemblée avec le composite consolidé formé à l'étape E,
G) moyennant quoi un non-tissé composite est obtenu.

12. Utilisation d'un non-tissé composite selon une ou plusieurs des revendications 1 à 11 comme article de nettoyage, de préférence dans laquelle, à l'usage, la couche A ou la couche B est en contact avec la surface à nettoyer.

13. Procédé de nettoyage comprenant les étapes suivantes :
A') obtention d'un dispositif de nettoyage comprenant un non-tissé composite selon une ou plusieurs des revendications 1 à 11,
B') nettoyage d'une surface avec le dispositif de nettoyage, la couche A ou la couche B, de préférence la couche A du non-tissé composite étant en contact avec la surface à nettoyer.

14. Procédé de nettoyage selon la revendication 13 dans lequel la surface à nettoyer est une surface plate, en particulier un sol.

15. Dispositif de nettoyage, en particulier un balai plat, comprenant un non-tissé composite selon une ou plusieurs des revendications 1 à 10.
